# FASCICULE DE BREVET EUROPEEN

(11) **EP 0 555 603 B1**
(45) Date de publication et mention de la délivrance du brevet: **12.06.1996**
(21) Numéro de dépôt: 92403415.0
(22) Date de dépôt: 15.12.1992
(51) Int. Cl.: B01D 63/04, C12G 1/06, C12M 1/12

(54) **Cartouche de fibres creuses microporeuses pour la fermentation de boissons sucrées**
Patrone mit mikroporösen Hohlfasern für die Gärung von Süssgetränken
Microporous hollow fibres cartridge for the fermentation of sweet beverages

(30) Priorité: 21.01.1992 FR 9200591
(43) Date de publication de la demande: 18.08.1993
(73) Titulaire: MILLIPORE S.A., F-67120 Molsheim (FR)
(72) Inventeur: Lemonnier, Jean, F-78110 Le Vesinet (FR)
(74) Mandataire: Rinuy, Santarelli

(56) Documents cités:
- EP-A- 0 138 060
- EP-A- 0 210 915
- EP-A- 0 371 189
- WO-A-90/02168
- DE-U- 9 016 406
- FR-A- 1 003 710
- FR-A- 1 306 640
- GB-A- 2 223 690

## Description

La présente invention concerne la fermentation de boissons sucrées et notamment la préparation de vin mousseux comme le champagne par une deuxième fermentation, ou refermentation, en bouteille d'un vin non mousseux et des moyens destinés à la mise en oeuvre d'une telle méthode de préparation.

La méthode traditionnelle dite "champenoise" consiste à ajouter à du vin normal non mousseux, dont la première fermentation alcoolique est terminée, une liqueur de tirage contenant du sucre et la levure de fermentation assurant la transformation du sucre en gaz carbonique, la mise en bouteille étant effectuée avant ou après ces étapes d'addition.

Les bouteilles sont ensuite bouchées à l'aide d'un bouchon creux en matière plastique inséré dans le goulot de la bouteille et serties à l'aide d'une capsule métallique.

Elles sont alors stockées généralement à l'horizontale "sur lattes" pendant une longue période allant de plusieurs mois à plusieurs années dans des caves où la température est maintenue constante, généralement entre 10 et 15°C pour que la fermentation se déroule avec la montée en pression correspondante ou "prise de mousse" dans les bouteilles.

A la fin de cette longue période de fermentation, chaque bouteille doit être remuée individuellement à de nombreuses reprises, pour décoller le dépôt de fermentation qui risquerait d'adhérer aux parois de la bouteille, durant cette période de remuage les bouteilles sont également inclinées puis stockées "sur pointes", c'est à dire inclinées goulot vers le bas, pour faciliter la décantation des levures et favoriser le dépôt des lies de fermentation à l'intérieur du bouchon creux en matière plastique situé dans le goulot de la bouteille.

Le remuage terminé, les bouteilles sont transportées verticalement, goulot vers le bas et sont plongées dans un bain de saumure de réfrigération maintenue à - 20°C environ, pour former par congélation un glaçon de vin contenant les déchets des levures de fermentation.

Les bouteilles sont alors soumises à une opération de dégorgement qui consiste à retourner verticalement les bouteilles ainsi congelées, goulot vers le haut, et à les décapsuler, ce qui provoque, sous l'action de la pression régnant à l'intérieur de la bouteille, l'éjection du bouchon de plastique solidaire du glaçon contenant les sédiments de fermentation.

Le niveau des bouteilles est alors complété par addition d'une liqueur d'expédition et la bouteille bouchée par un bouchon définitif qui est généralement en liège.

La méthode traditionnelle dite "champenoise" que nous venons de décrire nécessite une main d'oeuvre importante, notamment après la fermentation lors du remuage des bouteilles, qui s'effectue souvent à la main ; elle implique une superficie importante au sol pour le stockage des bouteilles sur pupitre et un temps de stockage assez long puisqu'il peut couramment atteindre plus d'un mois ; elle comporte en outre une étape de congélation du goulot des bouteilles, indispensable pour l'élimination des levures.

Des tentatives ont eu lieu pour tenter de remédier à ces inconvénients.

Le certificat d'utilité allemand DE-U-9 016 406 de QUETSCH, publié le 4 avril 1991, décrit ainsi un bioréacteur pour fabrication de boissons carbonatées, comme la deuxième fermentation de vin sucré selon la méthode traditionnelle champenoise. Ce bioréacteur (B) consiste en un récipient en papier filtre (4) du type de celui utilisé par les fumeurs de pipe, présentant un alésage (7) rempli de micro-organismes, et dont les deux extrémités sont fermées par des bouchons (5) et (6). Ce bioréacteur (B) est collé ou coincé dans un bidule (1) spécial, lui-même serti dans le goulot d'une bouteille à l'aide d'une capsule circulaire (8).

Le brevet européen EP-B-0 210 915 de la demanderesse décrit un procédé de fermentation du vin en bouteille selon la méthode champenoise. Ce procédé antérieur comprend l'introduction d'une cartouche tubulaire filtrante dans le goulot de la bouteille de vin additionné de la quantité de sucre nécessaire pour obtenir la pression finale désirée du gaz carbonique. Cette cartouche présente un corps tubulaire perforé, recouvert extérieurement d'une membrane filtrante hydrophile et d'une membrane filtrante hydrophobe et contient les levures nécessaires à la fermentation des vins sucrés avec dégagement de gaz carbonique. L'utilisation d'une telle cartouche filtrante a pour avantages de supprimer la nécessité de procéder au remuage qui permettait de concentrer le dépôt des levures dans le col de la bouteille, et de réfrigérer le goulot de la bouteille, qui permettait de congeler et d'éjecter le glaçon contenant des résidus de levures, puisque les levures ne sont plus en contact avec l'intérieur de la bouteille.

La technique décrite dans le brevet européen précité présente toutefois des inconvénients.

En effet la demanderesse a remarqué que la montée en pression du gaz carbonique dans les bouteilles munies d'une cartouche selon l'enseignement du brevet EP-B-210.915 nécessitait un temps nettement supérieur à celui nécessaire à la fermentation selon la méthode traditionnelle champenoise. Or une telle augmentation de la durée de prise de mousse se traduit par une modification inacceptable des propriétés organoleptiques du vin ayant subi une deuxième fermentation dans ces conditions.

De plus, au cours des expériences poursuivies pour identifier les mécanismes mis en jeu lors de la prise de mousse selon le brevet antérieur en question, la demanderesse a constaté que la cartouche, remplie de levain et immergée dans le vin, se vidait rapidement de tout liquide sous la pression du gaz carbonique produit par les levures. Le gaz ainsi accumulé à l'intérieur de la cartouche ne s'échappait, sous forme de bulles, par l'évent, constitué par la membrane hydrophobe, que lorsque la pression était suffisante pour surmonter les forces de tension superficielle.

La cartouche filtrante antérieure se comporte donc comme un fermenteur de surface, dans lequel seules les levures en contact avec la membrane hydrophile sont mouillées par le vin et peuvent donc vivre et consommer du sucre.

De plus, au cours de la réaction de fermentation, les levures qui consomment le sucre en produisant principalement de l'éthanol et du gaz carbonique, dégagent de l'énergie sous forme de chaleur.

Le vin au contact des levures est appauvri en sucre et simultanément légèrement élevé en température par la réaction de fermentation, il est alors remplacé, par convection thermique par du vin plus froid et plus riche en sucre.

Or la structure même de la cartouche décrite dans le brevet européen susvisé, où la surface de la membrane, tapissée intérieurement de levures, se comporte comme un générateur de chaleur, limite les courants de convection du fait de sa forme cylindrique et de son encombrement dans le goulot de la bouteille.

Pour éviter ces différents inconvénients, la présente invention a pour objet un dispositif perfectionné dont la mise en oeuvre fait appel à la technique de fibres creuses microporeuses, utilisée essentiellement pour la filtration de l'eau ou la dialyse du sang (voir notamment la demande de brevet européen EP-A-0 138 060).

Le perfectionnement selon la présente invention consiste en une cartouche tubulaire présentant un corps tubulaire perforé et un ou plusieurs éléments microporeux, immobilisant des levures provoquant une fermentation d'une boisson sucrée avec dégagement de gaz carbonique, caractérisée en ce que le ou lesdits éléments microporeux de rétention se présentent sous forme de fibres creuses microporeuses qui sont logées à l'intérieur du corps tubulaire et remplies desdites levures.

Ces fibres, qui peuvent être soit repliées en forme de U soit sous forme de simples brins borgnes à l'intérieur du corps tubulaire, peuvent être toutes hydrophiles dans la cartouche selon l'invention. Elles peuvent être aussi soit pour certaines d'entre elles entièrement hydrophiles et pour certaines autres entièrement hydrophobes soit chacune d'entre elles peut être partiellement hydrophile et partiellement hydrophobe.

Un tel perfectionnement selon l'invention non seulement permet de conserver les avantages liés à l'utilisation d'une cartouche selon le brevet européen précité mais en outre présente les avantages supplémentaires suivants :
Tout d'abord, l'augmentation de la surface poreuse d'échange entre le vin sucré et l'intérieur des fibres creuses dans la cartouche selon l'invention par rapport à la surface des membranes de la cartouche décrite dans le brevet EP-B-0 210 915 est de l'ordre de 5 à 10 fois, pour une cartouche de même dimension. C'est ainsi que la surface totale d'échange de 50 fibres poreuses en U disposés dans une cartouche de 12 mm de diamètre intérieur et de 60 mm de longueur est environ 5 fois plus important. Cette surface ainsi accrue à environ 100 cm² de surface d'échange correspond à la surface d'un dépôt de levure libre dans une bouteille, selon la méthode traditionnelle.

Ensuite, du fait de leur forme et de leur moindre encombrement en volume, les fibres creuses microporeuses favorisent, au cours de la réaction de fermentation, la formation de courants de convection bien plus importants que dans le cas de la cartouche du brevet européen précité.

De plus, alors que l'emploi de la cartouche décrite dans le brevet européen EP-B-0 210 915 nécessite l'utilisation d'une protection des membranes hydrophiles et hydrophobes très fragiles soudées à l'extérieur du corps tubulaire perforé, par un grillage en matière plastique, pour éviter toute perforation due à des chocs intempestifs, au contraire, les fibres creuses microporeuses, qui sont souples et donc flottantes ne nécessitent pas de support mais une simple protection extérieure constituée par le corps tubulaire perforé de la cartouche.

Enfin, compte-tenu de la faible section des fibres creuses microporeuses, qui est de l'ordre de 300 micromètres environ (et dont le diamètre de pore varie de 0,2 à 2 micromètres), les levures, qui ont une dimension de l'ordre de 3 à 7 micromètres et qui sont introduites sous pression à l'intérieur de ces fibres et viennent tapisser leurs parois internes, ont moins tendance à décanter et à s'agglutiner en quittant ces parois que dans la cartouche faisant l'objet du brevet EP-B-0 210 915. La cartouche selon la présente invention garantit donc par suite de la présence de ces fibres creuses de petit diamètre le maintien d'une bonne surface de contact entre la boisson sucrée et les levures, pendant toute la durée de la fermentation.

La présente invention va maintenant être décrite à l'aide des dessins ci-joints et dans lesquels :
- La figure 1 représente une vue en élévation d'une cartouche filtrante selon l'invention disposée dans le goulot d'une bouteille, coupée selon un plan axial ;
- la figure 2 représente une coupe selon la ligne 2 - 2 de la figure 4 de la cartouche filtrante de la figure 1 ;
- la figure 3 représente une vue du dessus de la cartouche de la figure 2, dont on a supprimé le film plastique l'obturant pour ne pas masquer l'intérieur ;
- la figure 4 représente une coupe selon la ligne 4 - 4 de la figure 2 ;
- la figure 5 représente une vue en coupe d'une réalisation particulière d'une fibre creuse microporeuse utilisée dans une cartouche selon l'invention ;
- et la figure 6 représente des courbes obtenues en mesurant la montée en pression dans des bouteilles selon la méthode traditionnelle dite champenoise, avec une cartouche selon le brevet EP-B-210.915 et avec une cartouche selon la présente invention.

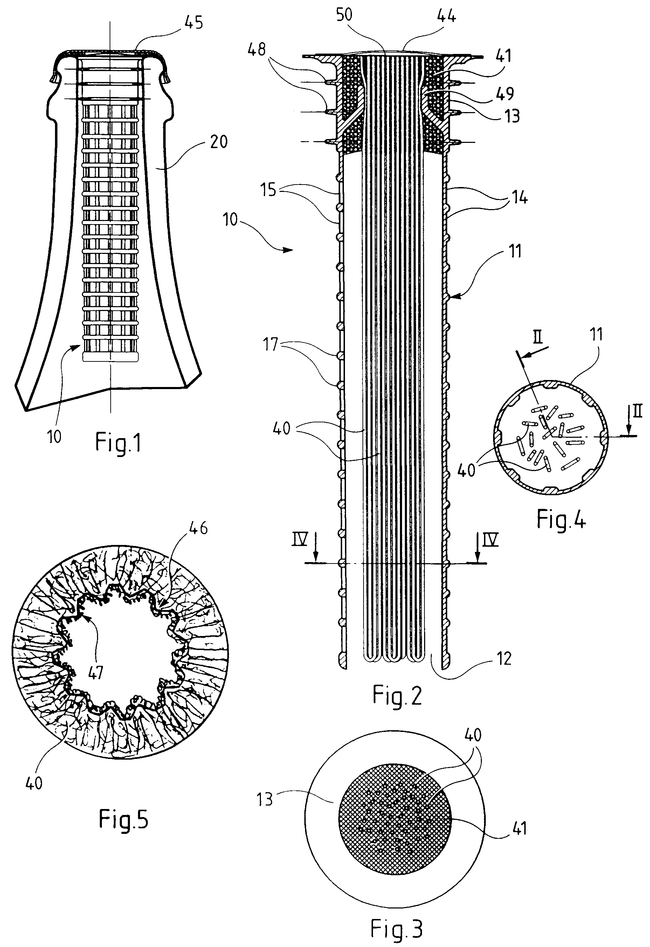

La cartouche de fibres creuses microporeuses 10 faisant l'objet de la présente invention est représentée, sur la figure 1, enfilée dans le goulot, d'une bouteille 20 où elle est sertie par une capsule métallique 45.

Cette cartouche 10 présente un corps tubulaire perforé 11 de forme généralement cylindrique dont l'extrémité inférieure 12 est ouverte et dont l'extrémité supérieure ouverte comporte une partie cylindrique de bouchage 13 qui possède des lèvres 48 assurant l'étanchéité dans le goulot de la bouteille et dont le diamètre est supérieur à celui du corps tubulaire 11.

Comme le montre la figure 2, le corps tubulaire 11 comporte une série de rainures extérieures 14 et des anneaux 17 qui délimitent les perforations 15 mettant en communication l'intérieur avec l'extérieur de la cartouche.

Des fibres creuses microporeuses 40 sont disposées à l'intérieur du corps tubulaire 11, où elles sont repliées en forme de U dont le fond est situé à proximité de l'extrémité ouverte 12 du corps tubulaire et dont les deux branches parallèles de ce U s'étendent axialement sur toute la longueur de ce corps pour déboucher à l'extrémité supérieure de la partie cylindrique 13.

La mise en place des fibres creuses 40 s'effectue en introduisant à l'intérieur du corps de la cartouche les fibres 40 repliées en forme de U et en coulant un bouchon de matière 41 à la partie supérieure 13 de la cartouche.

La matière à utiliser pour former le bouchon 41 est de préférence une colle thermofusible et non pas une colle habituelle de type polyuréthanne ou époxy ; en effet les colles thermofusibles permettent de simplifier la fabrication des cartouches selon l'invention en supprimant, d'une part, l'étape de centrifugation nécessaire pour répartir les colles à plusieurs composants et d'autre part, l'étape de polymérisation.

Après coulée de la matière servant à la fabrication du bouchon 41, les fibres creuses microporeuses 40 sont maintenues en place par le bouchon 41 qui les emprisonne en les solidarisant entre elles et avec la paroi interne de la partie cylindrique de bouchage 13.

Une lèvre cylindrique 49 solidaire de la partie cylindrique 13 coaxiale avec cette dernière et de diamètre inférieur à elle, assure l'étanchéité de part et d'autre du bouchon 41, lors du retrait inévitable de la matière utilisée pour la fabrication dudit bouchon. On notera, comme le montre la figure 2, que la partie 13 et la lèvre 49 définissent une goulotte en forme de couronne recevant la matière du bouchon 41 de façon à entourer l'ensemble des fibres 40 par une couronne cylindrique de ladite matière.

On peut alors découper les fibres dans un plan perpendiculaire à l'axe de la cartouche et correspondant à l'extrémité supérieure ouverte de la partie cylindrique.

Les fibres creuses microporeuses 40 sont disponibles dans le commerce et consistent en fibres de matières plastiques telles que les polyamides, les polysulfones, les polyéthersulfones, les polyesters dont le triacétate de cellulose et les polyoléfines, comme le polyéthylène ou le polypropylène. Elles ont un diamètre interne compris entre 100 et 500 micromètres et un diamètre externe compris entre 200 et 600 micromètres. Le diamètre de pore de 0,2 à 2 micromètres varie selon la nature du polymère et le procédé de fabrication.

La demanderesse préfère utiliser, dans les cartouches selon l'invention, des fibres creuses microporeuses dont la surface intérieure à été modifiée de façon à présenter des reliefs intérieurs longitudinaux.

Comme le montre par exemple la section droite d'une telle fibre (40), représentée sur la figure 5, ces reliefs (46), qui peuvent prendre une forme crénelée ou étoilée, sont obtenus directement au moment de l'extrusion de la fibre creuse grâce à la forme particulière du noyau, en forme d'aiguille, sur lequel la fibre est extrudée.

Ces reliefs intérieurs (46) améliorent l'accrochage des levures (47) sur les parois internes des fibres et permettent d'augmenter la surface d'échange.

Selon la mise en oeuvre représentée sur la figure 2, la majorité des fibres creuses est hydrophile, une ou plusieurs fibres étant hydrophobes, ce qui permet l'évacuation du gaz carbonique lors de la fermentation du vin.

Après remplissage des fibres creuses 40 avec le levain contenant la levure appropriée, l'ouverture supérieure ouverte de la partie cylindrique 13 est de préférence fermée par un film plastique 44 soudé sur la face supérieure ouverte.

Le film plastique 44 ainsi que la découpe particulière du bouchon 41 créent un chambre de communication 50 entre l'intérieur de toutes les fibres creuses.

Ainsi le gaz carbonique provenant des levures situées dans les fibres hydrophiles chemine jusqu'à cette chambre 50 et est évacué ensuite dans le vin de la bouteille par l'intermédiaire des fibres hydrophobes.

En l'absence de fibres hydrophobes le gaz carbonique peut néanmoins s'évacuer lorsque sa pression est suffisamment élevée pour traverser les fibres hydrophiles.

Une telle montée en pression du gaz carbonique à l'intérieur des fibres creuses hydrophiles, survenant dès le début de la fermentation est nuisible au métabolisme des levures et tend à augmenter le temps nécessaire à la prise de mousse.

Pour éviter ces inconvénients, on préfère selon l'invention, que la cartouche contienne au moins une fibre partiellement ou entièrement hydrophobe, celle-ci étant en communication avec l'extérieur des autres fibres creuses hydrophiles.

Lorsque la fermentation est terminée et qu'on retire la capsule métallique (45) retenant la cartouche dans le goulot de la bouteille, la pression régnant à l'intérieur de la bouteille et de la cartouche, qui peut être de l'ordre de 6 x 10⁵ Pa, provoque l'éjection de cette dernière.

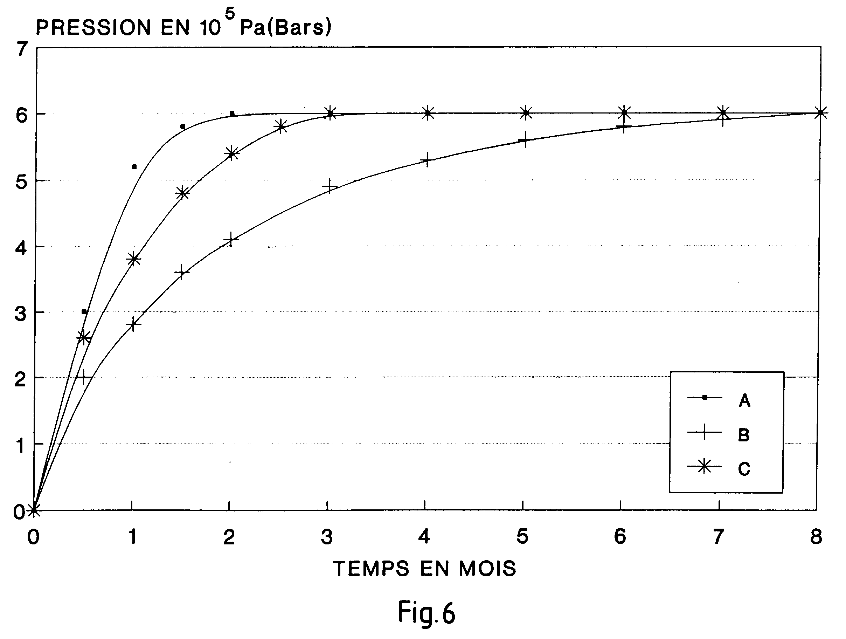

La figure 6 montre la montée en pression en fonction du temps dans des bouteilles contenant le même vin sucré et maintenues à une température constante de 13°C.

Le même nombre de levures, à savoir 10⁹ cellules, provenant d'un même levain a été utilisé dans les trois essais A, B et C.

Sur la courbe (A), figurent les résultats obtenus avec des levures libres selon la méthode traditionnelle.

Sur la courbe (B), on a indiqué les résultats obtenus avec des cartouches du type décrit dans le brevet EP-B-210.915 et enfin, sur la courbe (C), ceux obtenus avec des cartouches équipées de fibres creuses microporeuses hydrophiles et hydrophobes remplies de levures selon la présente invention.

La cartouche selon l'invention utilisée pour obtenir les résultats obtenus sur la courbe C comportait 50 fibres creuses hydrophiles représentant une surface d'échange d'environ 100 cm² et une seule fibre creuse hydrophobe d'environ 2 cm².

La comparaison de ces différentes courbes montre que les cartouches selon l'invention permettent d'obtenir une montée en pression, nettement améliorée par rapport à celle obtenue avec les cartouches selon le brevet EP-B-210.915, et qui se rapproche de celle obtenue selon la méthode traditionnelle des vins de champagne.

En effet, à l'examen de la figure 6, on constate qu'on obtient une prise de mousse correspondant à une pression finale de 6 x 10⁵ Pa (6 bars) dans la bouteille au bout de 3 mois avec la cartouche selon la présente invention, au lieu de 8 mois avec la cartouche selon le brevet EP-B-0 210 915.

Les cartouches tubulaires microporeuses selon la présente invention peuvent être utilisées pour la première fermentation alcoolique du vin ou la seconde fermentation du vin en bouteille selon la méthode traditionnelle dite "champenoise". Elles peuvent également être utilisées pour l'élaboration d'autres boissons que le vin, telles que bière, cidre et autres et dans des récipients autres que les bouteilles tels les barriques ou les cuves.

## Revendications

1. Cartouche tubulaire (10) comprenant un corps tubulaire perforé (11) et un ou plusieurs éléments microporeux, immobilisant des levures provoquant la fermentation d'une boisson sucrée avec dégagement de gaz carbonique, caractérisée en ce que le ou lesdits éléments microporeux de rétention, se présentent sous forme de fibres creuses microporeuses (40) qui sont logées à l'intérieur du corps tubulaire (11) et remplies desdites levures (47), les dites fibres creuses microporeuses (40) étant toutes hydrophiles ou certaines d'entre elles étant, entièrement hydrophiles et certaines autres entièrement hydrophobes ou bien chacune d'entre elles étant partiellement hydrophile et partiellement hydrophobe.

2. Cartouche selon la revendication 1, caractérisée en ce que les fibres creuses microporeuses (40) sont maintenues en place par un bouchon (41), de préférence en colle thermofusible, qui emprisonne les fibres en les solidarisant entre elles et avec la paroi interne de la cartouche.

3. Cartouche selon la revendication 2, caractérisée en ce que la partie cylindrique d'extrémité (13) de la cartouche est solidaire d'une lèvre cylindrique (49), coaxiale avec la partie (13) et de diamètre inférieur à cette dernière, de manière à assurer l'étanchéité du bouchon (41), lors du retrait inévitable de la matière utilisée pour la fabrication dudit bouchon.

4. Cartouche selon l'une quelconque des revendications 1 à 3, caractérisée en ce que les fibres creuses microporeuses (40) présentent des reliefs intérieurs longitudinaux (46).

5. Cartouche selon l'une quelconque des revendications précédentes caractérisée en ce que le corps tubulaire perforé (11) comporte deux extrémités ouvertes (12) et (13), l'une d'entre elles (13) possédant des lèvres (48) assurant l'étanchéité de la cartouche sur le goulot de la bouteille.

6. Cartouche selon l'une quelconque des revendications précédentes, caractérisée en ce que l'extrémité ouverte de la partie cylindrique (13) est fermée par un film de matière plastique (44) soudé à ladite extrémité ouverte en créant une chambre de communication (50) entre les différentes fibres creuses microporeuses (40).

7. Application de la cartouche selon l'une quelconque des revendications précédentes à la fermentation d'une boisson sucrée dans une bouteille et notamment du vin selon la méthode traditionnelle dite "champenoise".

8. Bouteille de vin caractérisée en ce qu'elle contient, dans son goulot, une cartouche selon l'une quelconque des revendications 1 à 6.

## Claims

1. Tubular cartridge (10) comprising a perforated tubular body (11) and one or more microporous elements, retaining yeasts which cause the fermentation of a sugar-containing drink with the release of carbon dioxide gas, characterized in that the said microporous retention element or elements are in the form of microporous hollow fibres (40) which are arranged inside the tubular body (11) and filled with the said yeasts (47), said microporous hollow fibres (40) being all hydrophilic or some of them being entirely hydrophilic and some others entirely hydrophobic or each of them being partially hydrophilic and partially hydrophobic.

2. Cartridge according to claim 1, characterized in that the microporous hollow fibres (40) are held in place by a plug (41), preferably made of a thermoplastic adhesive, which traps the fibres and seals them together and with the inner wall of the cartridge.

3. Cartridge according to claim 2, characterized in that the cylindrical part of the end (13) of the cartridge is integral with a cylindrical lip (49), coaxial with the part (13) and of a smaller diameter than the latter, so as to ensure the seal of the plug (41), when the material used for making the said plug inevitably shrinks.

4. Cartridge according to any one of claims 1 to 3, characterized in that the microporous hollow fibres (40) have longitudinal inner contours (46).

5. Cartridge according to any one of the preceding claims, characterized in that the perforated tubular body (11) comprises two open ends (12) and (13), one of them (13) having lips (48) which ensure the sealing of the cartridge in the neck of the bottle.

6. Cartridge according to any one of the preceding claims, characterized in that the open end of the cylindrical part (13) is sealed by a plastic film (44) welded to said open end creating a communication chamber (50) between the different microporous hollow fibres (40).

7. Use of the cartridge according to any one of the preceding claims for the fermentation of a sugar-containing drink in a bottle and in particular wine according to the traditional so-called "champagne" method.

8. Wine bottle characterized in that it contains, in its neck, a cartridge according to any one of claims 1 to 6.

## Patentansprüche

1. Röhrenförmige Patrone (10) mit einem rohrförmigen, mit Öffnungen versehenen Körper (11) und einem oder mehreren mikroporösen Elementen, die Hefe zur Auslösung der Gärung eines mit Kohlensäuregas versetzten Süßgetränkes festhalten, dadurch gekennzeichnet, daß das oder die mikroporöse(n) Rückhalte-Element(e) in Form von mikroporösen Hohlfasern (40) vorliegt/-en, die im Inneren des rohrförmigen Körpers (11) aufgenommen und mit besagter Hefe (47) gefüllt sind, und die alle hvdrophil oder einige von ihnen völlig hydrophil und einige andere gänzlich hydrophob oder aber jede von ihnen teilweise hydrophil und teilweise hydrophob ist/sind.

2. Patrone nach Anspruch 1, dadurch gekennzeichnet, daß die mikroporösen Hohlfasern (40) mittels eines Verschlußstücks (41) in Stellung gehalten werden, das bevorzugt aus heißschmelzendem Klebstoff besteht und die Fasern festhält, wobei es sie untereinander und mit der Innenwand der Patrone verbindet.

3. Patrone nach Anspruch 2, dadurch gekennzeichnet, daß der zylindrische Endabschnitt (13) der Patrone mit einer zylindrischen Lippe (49) fest verbunden ist, die koaxial zu ihm (13) liegt und von kleinerem Durchmesser als er ist derart, daß die Dichtigkeit des Verschlußstücks (41) während des unvermeidlichen Schwundes des für die Herstellung dieses Verschlußstücks eingesetzten Werkstoffes gewährleistet wird.

4. Patrone nach einem der Ansprüche 1 bis 3, dadurch gekennzeichnet, daß die mikroporösen Hohlfasern (40) innere Längserhebungen (46) aufweisen.

5. Patrone nach einem der vorhergehenden Ansprüche, dadurch gekennzeichnet, daß der rohrförmige, mit Öffnungen versehene Körper (11) zwei offene Enden (12 und 13) aufweist, deren eines (13) mit Lippen (48) versehen ist, welche die Dichtigkeit der Patrone auf dem Flaschenhals gewährleisten.

6. Patrone nach einem der vorhergehenden Ansprüche, dadurch gekennzeichnet, daß das offene Ende (13) des zylindrischen Abschnitts von einem Kunststoffilm (44) verschlossen wird, der an dieses offene Ende angeschweißt ist und dabei eine Verbindungskammer (50) zwischen den verschiedenen mikroporösen Hohlfasern (40) erzeugt.

7. Anwendung einer Patrone nach einem der vorhergehenden Ansprüche für die Gärung eines Süßgetränkes in einer Flasche, insbesondere von Wein nach dem traditionellen, als "Champenoise" bezeichneten Verfahren.

8. Weinflasche, dadurch gekennzeichnet, daß sie in ihrem Hals eine Patrone nach einem der Ansprüche 1 bis 6 aufweist.
